# EUROPEAN PATENT SPECIFICATION

(11) **EP 1 602 200 B1**
(45) Date of publication and mention of the grant of the patent: **05.07.2006**
(21) Application number: 04715424.0
(22) Date of filing: 27.02.2004
(51) Int. Cl.: H04L 12/28

(54) **WLAN TIGHT COUPLING SOLUTION**
EINE TIGHT-COUPLING WLAN LÖSUNG
SOLUTION DE COUPLAGE SERRE POUR RESEAU LOCAL SANS FIL

(30) Priority: 27.02.2003 US 450576 P
(43) Date of publication of application: 07.12.2005
(60) Divisional application: 06101469.2
(73) Proprietor: Thomson Licensing, 92100 Boulogne-Billancourt (FR)
(72) Inventor: BICHOT, Guillaume, F-35630 La Chapelle Chaussee (FR)
(74) Representative: Kohrs, Martin
(86) International application number: PCT/IB2004/001091
(87) International publication number: WO 2004/077204

(56) References cited:
- APOSTOLIS K. SALKINTZIS, CHAD FORS: "WLAN-GPRS Integration for Next Generation Mobile Data Networks" IEEE WIRELESS COMMUNICATIONS, [Online] October 2002 (2002-10), pages 112-124, XP002293263 Retrieved from the Internet: URL:www.ieee.org> [retrieved on 2004-08-20]
- SHIAO-LI TSAO, CHIA-CHING LIN: "Design and Evaluation of UMTS-WLAN Interworking Strategies" IEEE VEHICULAR TECHNOLOGY CONFERENCE, [Online] 24 September 2002 (2002-09-24), - 28 September 2002 (2002-09-28) pages 777-781, XP002293264 Retrieved from the Internet: URL:www.ieee.org> [retrieved on 2004-08-20]
- "Broadband Radio Access Networks (BRAN); HIPERLAN Type 2; Requirements and Architectures for Interworking between HIPERLAN/2 and 3rd Generation Cellular systems; ETSI TR 101 957" ETSI STANDARDS, EUROPEAN TELECOMMUNICATIONS STANDARDS INSTITUTE, SOPHIA-ANTIPO, FR, vol. BR, no. V111, August 2001 (2001-08), XP014005038 ISSN: 0000-0001
- 3GPP: "Technical Specification Group Services and System Aspects; 3GPP system to Wireless Area Network (WLAN) Interworking; Functional and architecture definition" 3GPP TECHNICAL REPORT TR23.934 V1.0.0, [Online] August 2002 (2002-08), pages 1-37, XP002293265 Retrieved from the Internet: URL:www.3gpp.org> [retrieved on 2004-08-20]

## Description

### Field of the Invention

The invention relates to communications between a user terminal and a cellular communication system by means of a wireless LAN. The wireless LAN communicates with the cellular system by means of the Internet. The user terminal is attached to the cellular communication system through the wireless LAN access point.

### Background of the Invention

Public Wireless Local Area Networks (WLAN) systems are becoming more common, but the WLAN systems are for the most part independently operated and controlled. Thus, there are many separate owner/operators of WLAN systems. Each separately controlled system is termed a "domain." Because of the large number of owner/operators or domains, it is difficult or impossible for a user to subscribe to all the different WLAN systems to which connection may be made, especially in view of the fact that the potential user may become aware of the existence of a wireless local area system in a particular area only when his portable communication device announces its availability. In order to ameliorate this situation and to provide improved service, some service providers aggregate, in some way, two or more separate WLAN systems by entering into agreements with other providers.

A communications service provider may provide various different kinds of service. In those cases in which the communications service provider is a cellular communications network (3GGP or cellphone service) provider, the provider may make available Internet access, with the user authenticated by the cellular network but Internet access by way of the Wireless Local Area Network (WLAN). In such Internet-only WLAN service, the Internet data never traverses or moves over the cellular system. However, the authentication, authorization, and accounting control data relating to the Internet service may traverse the cellular system. The term "loose coupling" is applied to communications in which control data for establishing a connection, and authenticating, authorizing, and accounting information of the user is routed through the WLAN to the cellular system, but once the connection is set up, the user data is routed to the internet, or other network, through only the WLAN. The loose coupling arrangement has the disadvantage that the cellular and WLAN systems are substantially independent, and the cellular system operator therefore does not have any ready access to information about the time usage of the WLAN system, or the volume of data, either or both of which may be useful in customer billing. Moreover the user cannot access certain cellular network specific services like SMS.

Another possible type of communication service is full cellular network based access, in which the user data and the control information both traverse the cellular network. In such service, the WLAN acts as a radio network portion of the cellular network and the user has access to the full cellular network service set, including Internet access and specific services like SMS. This type of communication is known as "tight" coupling. While theoretically appealing and potentially advantageous to the user and service provider, tight coupling has been considered by the various standardization groups to be too complex, as the protocols and requisite infrastructure would adversely affect the WLAN. Currently, certain standards bodies, such as the European Telecommunication Standard Institute (ETSI), Institute of Electrical and Electronic Engineers (IEEE), and 3^{rd} Generation Partnership Project (3GPP) are focusing on the loose coupling model due to its relative simplicity.

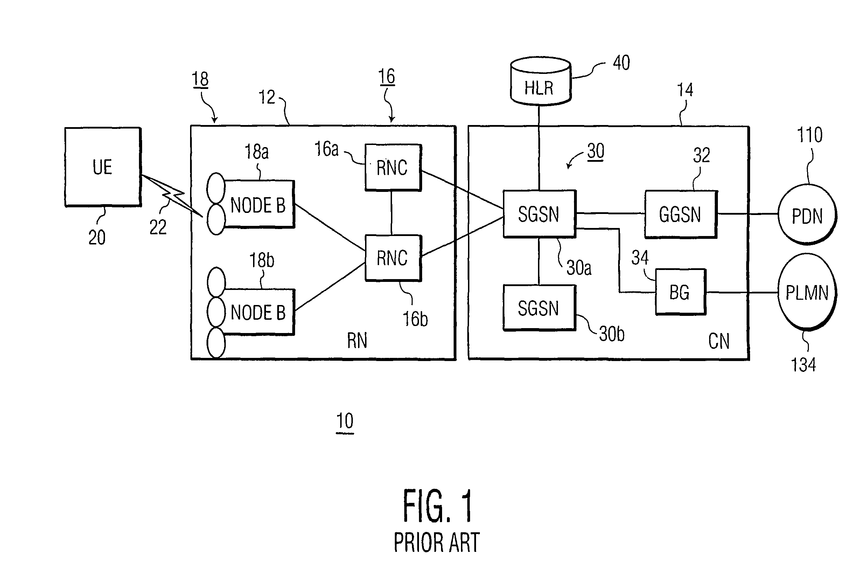

FIGURE 1 is a simplified block diagram of a prior art GPRS 3GPP digital cellular telecommunications system designated generally as 10. In general, such a system adheres to standards for digital cellular telecommunication system (Phase 2+)(GSM); Universal Mobile Telecommunications System (UMTS); General Packet Radio Service (GRPS); Service description; Stage 2 (3GPP TS 23.060 version 3.7.0 Release 1999. The system 10 of FIGURE 1 includes a radio access network (RN or RAN) 12 and a core network (CN) 14. The radio access network 12 includes a set 16 of Radio Network Controllers (RNC), some of which are illustrated as 16a and 16b. Each radio network controller (RNC) of set 16, such as RNC 16b, controls at least one "base station" or "Node B." In FIGURE 1, RNC 16b controls a set 18 including node B base stations 18a and 18b. Each node B base station corresponds to a cell of the cellular system. Each node B base station or cell communicates by wireless (radio) means with one or more mobile users (UE), one of which is designated 20, located in the zone of the corresponding cell, as suggested by symbol 22.

The core network (CN) 14 of the telecommunications system 10 of FIGURE 1 includes a set 30 of Serving GPRS Support Nodes (SGSN), two of which are designated 30a and 30b. Each SGSN of set 30 provides services for managing the connection between the core network 13 and the user 20, by way of the radio network controller 12. In this context, management of the connection refers to management of connection, authentication, and mobility. In this context, connection management relies on the process to provision network resources such as radio resources, memory, and priority in order to be able to transmit data. Mobility is the set of protocols/processes which allow the user to move among several cells, and is also known as handover. Each SGSN also serves as a "front end," providing the user 20 with access to other 3G services such as Short Messaging System (SMS).

**.** The Serving GPRS Support Nodes (SGSN) of set 30 of SGSNs of core network 14 communicate with a Home Location Register (HLR) which is illustrated as an external memory 40. The HLR 40 is the database that includes all relevant information relating to each subscriber to the network 10. The SGSN of set 30, as for example SGSN 30a, identifies and authenticates a user by reference to the HLR 40.

The Gateway GPRS Support Node (GGSN) 32 of core network 14 provides interconnection between core network 14 and an external Internet-Protocol (IP) based Packet Data Network (PDN) 110, such as the Internet.

The system 10 also includes a Border Gateway (BG) 34 in core network 14. Border gateway 34 is a function, which allows the user to roam between or among GPRS networks belonging to different domains (operators). Border Gateway 34 is connected to an external Public Land Mobile Network (PLMN) 134.

In operation of system 10, the RNCs 16a, 16b of set 16 implement or realize the interface between the core network 14 and the radio network.

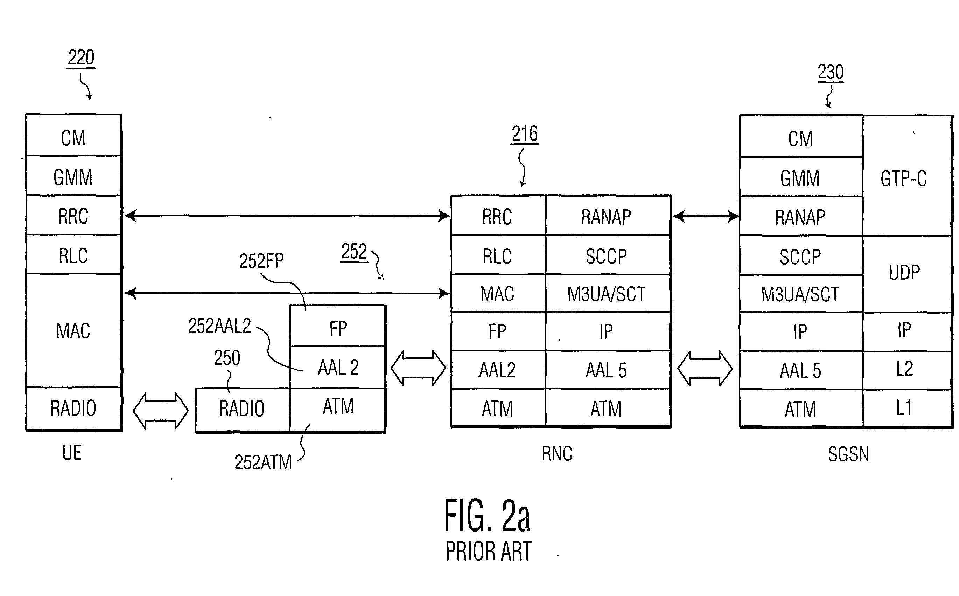

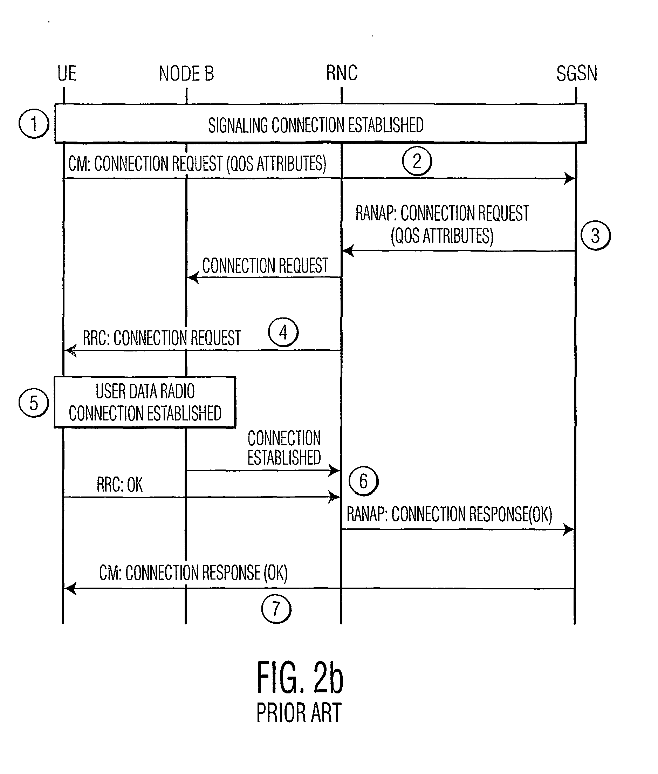

FIGURE 2a is a simplified illustration of the control protocol stacks of the mobile terminal (UE) 20, the node B of set 18, the Radio Network Controllers (RNC) of set 16, and the Serving GPRS Support Nodes (SGSN) of set 30, and FIGURE 2b illustrates a sequence of the successive protocol operations for opening a user data channel between the UE 20 and SGSN 30 of FIGURE 2a. In FIGURE 2a, protocols associated with the mobile terminal UE are designated generally as 220, protocols associated with the Node B are designated generally as 250, protocols associated with the RNC are designated generally as 216, and those associated with SGSNs are designated generally as 230. The radio interface between the mobile node UE and the Node B corresponds to one of the standardized 3G cellular radio interface, such as WCDMA. In the mobile terminal UE, the MAC (Medium Access Control) protocol in conjunction with the RLC (Radio Link Control) protocol allows the transport of information, whatever its nature (i.e. user data or control). The RRC (Radio Resource Control) protocol is used between the UE and the RNC for radio connection control (creation, removal, and/or modification of the connection). The GMM (GPRS Mobility Management) protocol and CM (Connection Management) protocols are used between the mobile terminal and the SGSN for respectively mobility management (authentication and handover) and user data connection management. The Node B (or base station) is under the control of an RNC through the usage of a set of protocols, which are not represented in FIGURE 2a. The RNC is controlled by the SGSN by means of the RANAP (Radio Network Application Protocol) protocol that is carried by a protocol stack based on ATM (Asynchronous Transfer Mode) not depicted. The SGSN communicates with the GGSN 32 of FIGURE 1 for control purposes by means of the GTP-C (GPRS Tunneling Protocol- Control) that is carried by a protocol stack based on the TCP/IP protocol stack. Figure 2b represents a sequence diagram of the successive protocol operations in order to open a data user channel between the mobile terminal and the SGSN.

Initially, a mobile terminal UE such as terminal 20, once switched on, catches or captures broadcast downlink information, thereby allowing the UE to send an attachment request to the SGSN through a physical transmission opportunity. The SGSN immediately opens a signaling channel used only for control purposes. This process is not depicted in FIGURE 1B and is represented as a first step by a numeral 1 within a circle. Once the basic signaling (or control) channel is set up, the mobile terminal UE requests a user data connection characterized by means of QOS (Quality Of Service) parameters through or by means of a Connection Management (CM) protocol (step 2 in Figure 2B). The appropriate SGSN, such as SGSN 30a of FIGURE 1, verifies the request (determines if the mobile terminal is authorized for the requested service) and requests through or by means of the Radio Access Network Protocol (RANAP) that an associated RNC, which in this case could be RNC 16b, establish the radio connection associated with the QOS parameters (circled step "3" in Figure 2b). The RNC (16b in this case) translates the QOS parameters into parameters which are used to establish the corresponding radio connection, and commands such a radio connection in both the base station (Node B 18a in this case) and the mobile terminal UE, corresponding to circled step 4 in Figure 2b). The RNC controls the terminal by means of the Radio Resource Control (RRC) protocol. The UE 20 and the Node B 18a use the parameters transmitted by the RNC (carry them without change) to configure their respective radio protocol layers, including Radio Link Control (RLC), Medium Access Control (MAC), and physical layers. The radio channel is then established (circled step 5 in Figure 2b). Both the Node B 18a and the mobile terminal UE confirm the operation, and the RNC acknowledges the operation to the SGSN (circled step 6 in Figure 2b). Last, the SGSN acknowledge the success of the operation to the mobile terminal using the CM protocol (circled step 7 in Figure 2b).

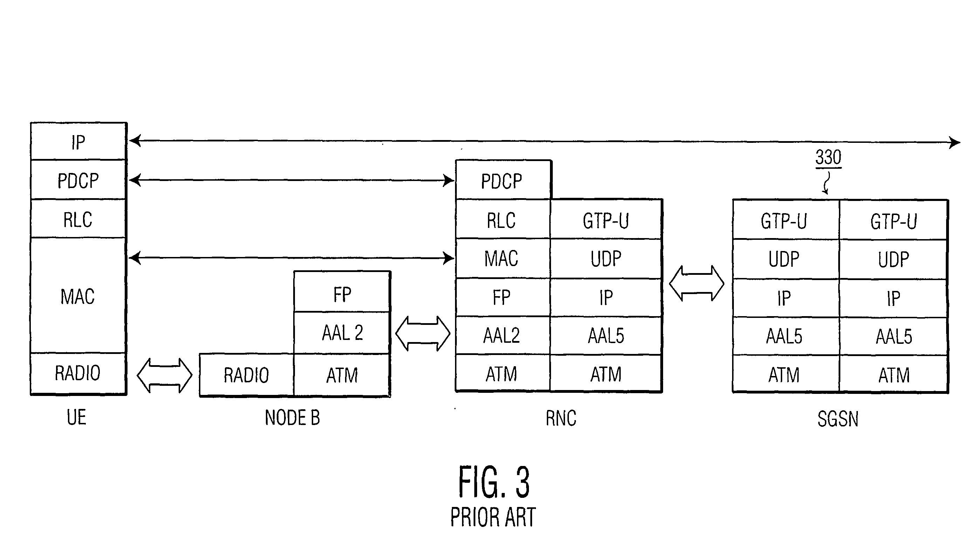

FIGURE 3 is a simplified representation of 3G GPRS user data protocol stack. User data (not illustrated) originating at the user terminal UE, which may, for example, be in Internet-Protocol (IP) form, is transported between the user terminal UE and the SGSN using the Packet Data Compression Protocol (PDCP), which compresses the IP header in order to conserve some bandwidth. Between the RNC stack and the SGSN stack 330, and within the remainder of the core network 14 of FIGURE 1 up to the stack (not illustrated in FIGURE 3) of the GGSN of FIGURE 1, the user data is carried by GPRS Tunnel Protocol (GTP) that is implemented over UDP/IP represented in

### FIGURE 3.

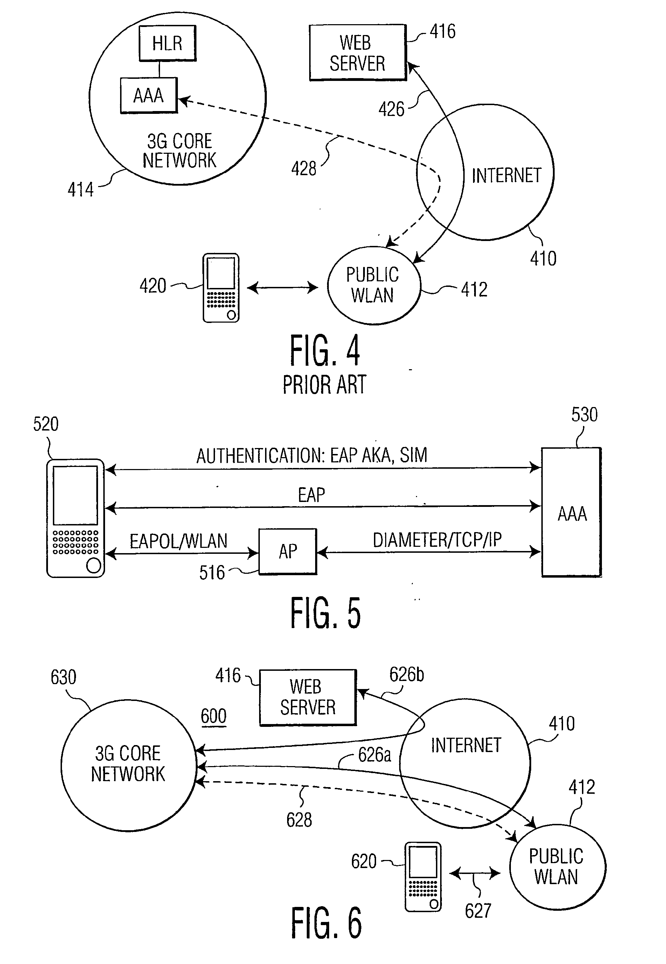

FIGURE 4 is a conceptual representation of the 3G-WLAN loose coupling arrangement. In FIGURE 4, the Internet is illustrated as a cloud or circle 410, the public WLAN system as a cloud or circle 412, and the 3G core network, corresponding to 14 of FIGURE 1, is designated 414. Additionally, FIGURE 416 shows a representative web server 416 and a mobile user 420, corresponding to user 20 of FIGURE 1.
In the prior-art scenario represented by FIGURE 4, user 420 is within the coverage region of public WLAN 412.

When the mobile user 420 of FIGURE 4 turns ON or energizes his mobile terminal so as to make a connection request illustrated as 430, the WLAN 412 detects this fact, and directs or redirects the connection request by way of a control path 428 through the Internet 410 toward an Authentication, Authorization, and Accounting (AAA) portion 424 of the core network 414. AAA 424 consults its Home Location Register 40 to determine if the user's data corresponds with that of an authorized user. After being authenticated, the AAA 424 authorizes the WLAN 412, to let the user data traffic through the access point. The user is then able to use the Internet, as by browsing, by way of a data path 426 communicating with web server 416.

In the communication domain, the protocols are split among three different planes, namely Management, Control and User. The Management protocols provide a way to configure the equipments. The Control protocols provide a way to control/command dynamically the equipments (e.g. connection establishment). The user plane protocols provide a way to carry user data. The three protocol stacks may include common protocols especially those relative to the transport of information. Figure 5 shows the Control plane protocol stack in case of the loose coupling model. The corresponding User plane protocol stack based on TCP/IP/Ethernet corresponds with the prior art and is not represented, but is simply IP over Ethernet over the WLAN MAC (IEEE 802.11 in our example).

The control protocol stacks associated with the mobile terminal 420, the Access Point (AP) 412, and the AAA server 424 of FIGURE 4 are represented in FIGURE 5 as 520, 516, and 530, respectively. FIGURE 5 assumes IEEE 802.11 as the radio interface between the mobile terminal 520 and the AP 516, but it can be also other WLAN protocols, such as the ETSI Hiperlan2 protocol. As illustrated in FIGURE 5, EAPOL information is transmitted between the mobile terminal 520 and the access point 516. EAPOL refers to EAP Over LAN, where the LAN is the public WLAN. EAPOL is a standardized (IEEE 802.1X) protocol that is used to carry EAP packets within Ethernet frames. "EAP" stands for Extended Authentication Protocol, which is a protocol that can be used to carry any kind of authentication protocol. The authentication protocol may be, for instance, the EAP AKA and EAP SIM that might be chosen by the 3GPP standard body. The DIAMETER protocol is a well-known IETF protocol (RFC 3588) used to control the authorization of the user by the AAA. It could be replaced by other equivalent protocols, such as the RADIUS protocol (RFC 2138). Once the user 520 is authenticated, meaning that the AAA server 424 of FIGURE 4 retrieved a corresponding entry in its Home Location Register or subscription database 40 and the authentication protocol succeeded, the AAA server 424 (530 of FIGURE 5) sends a DIAMETER message to the AP 412 (516 of FIGURE 5) in order to unblock the Ethernet traffic corresponding to the authenticated user 420 (520 of FIGURE 5).

### Summary of the Invention

The invention provides a method for implementing a tight coupling arrangement for allowing a mobile terminal to communicate with a communications network through first and second networks, wherein the first network comprises a wireless local area network (WLAN) and the second network comprises a cellular network. The invention places certain radio network control protocols within the mobile terminal to advantageously allow a tight coupling arrangement to be implemented using a WLAN access point that has been configured for a loose coupling arrangement. Specifically, the invention provides a method for implementing a tight coupling arrangement between first and second communications networks for allowing a mobile terminal to communicate with a third communications network through the first and second communications networks, comprising the steps of: (a) providing, in the first communications network, an access point having protocol stacks adapted for operation within a loose coupling arrangement that allows the mobile terminal to communicate with the third communications network through the first communications network without traversing through the second communications network; (b) providing, in the mobile terminal, radio network controller protocol stacks that directly interface with corresponding radio network controller protocol stacks in an access device of the second communications network; and (c) providing, in the access device of the second communications network, the corresponding radio network controller protocol stacks for interfacing with the mobile terminal radio network controller protocol stacks, whereby the mobile terminal communicates directly with the access device to traverse the second communications network to thereby communicate with the third communications network in a tight coupling arrangement.

In a particular mode of this aspect of the method of the invention, the step of communicating particular data includes the further step of communicating the particular data between the Serving GPRS Support Node and a server associated with the Internet. As a result, the user terminal can access or browse the Internet.

According to another aspect of the invention, a method for communicating between a mobile user terminal and a cellular network by way of a wireless LAN comprises the steps of providing at the user terminal a communication protocol for communicating with the wireless LAN, and providing at the user terminal, and over the communication protocol, a standardized EAPOL protocol for packet frame communication. In addition, the method includes the provision, at the user terminal, and over the EAPOL protocol, of a standardized EAP protocol for communicating authorization control information, and further providing, at the user terminal, and over the EAP protocol, a Radio Adaptation Layer protocol, which Radio Adaptation Layer protocol provides control of the radio communications. At the cellular network, a Serving GPRS Support Node is provided. An Internet protocol stack suited for communication over the Internet is associated with the Serving GPRS Support Node. A standardized EAP protocol for communicating authorization control information over the Internet is provided over the Internet protocol stack. A Radio Adaptation Layer protocol, which Radio Adaptation Layer protocol provides control of the radio communications, is provided over the EAP protocol at the Serving GPRS Support Node. Communications are between the wireless LAN and the cellular system by way of the Internet. Finally, communications are provided between the user terminal and the wireless LAN by use of the Radio Adaptation Layer.

In a particular mode of this other method, the step of providing, at the cellular network, a Serving GPRS Support Node, and associating with the Serving GPRS Support Node an Internet protocol stack suited for communication over the Internet, includes the step of providing at least TCP/IP protocol over a physical layer, and providing Diameter protocol over the TCP/IP protocol.

### Brief Description of the Drawing

FIGURE 1 is a simplified functional block diagram or architecture of a prior art 3G GPRS digital cellular telecommunications system;
FIGURE 2a is a simplified representation of 3G GPRS protocol stacks of various portions of the system of FIGURE 1, and FIGURE 2b illustrates a sequence of the successive protocol operations for opening a user data channel between the various portions of FIGURE 1;
FIGURE 3 is a simplified representation of 3G GPRS user data protocol stack;
FIGURE 4 FIGURE 4 is a conceptual representation of prior-art 3G-WLAN loose coupling;
FIGURE 5 represents the control protocol stacks associated with the mobile terminal, the Access Point (AP), and the AAA server of FIGURE 4;
FIGURE 6 is a simplified representation of the flow of control information and data according to an aspect of the invention; and
FIGURES 7 and 8 illustrate the control and data protocol stacks according to an embodiment of the invention, for enabling the connectivity functions expressed in FIGURE 6.

### Description of the Invention

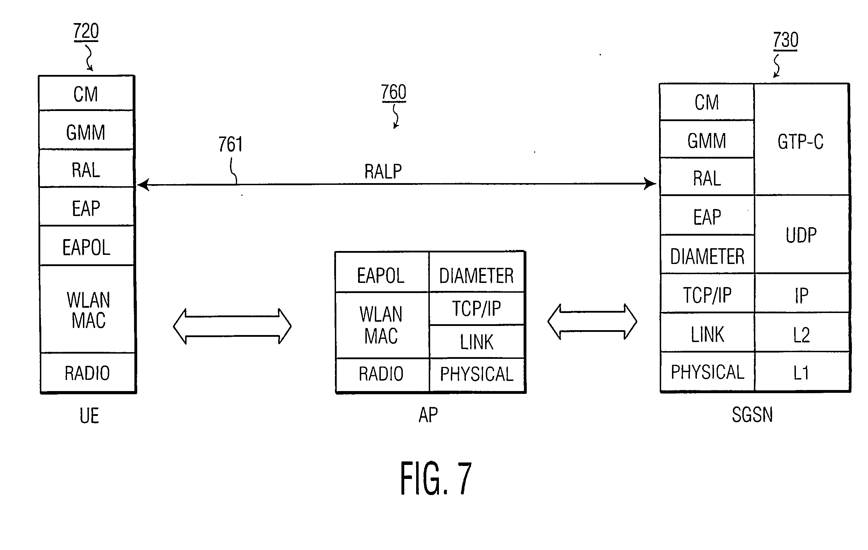

The prior art presented above shows that for WLAN -cellular network inter-connection, the loose coupling model is simple, but the relative simplicity is associated with some undesirable limitations or problems. These include the fact that the authentication protocol is new (IEEE 802.1x, EAP, ...) and consequently requires a new equipment (AAA server 424 in figure 4) inside the cellular network, and new interfaces with legacy equipments (HLR 40 in figure 4), all compliant with the new paradigm. In addition, a mobile terminal equipment like a cellular phone must include two different protocol stacks, depending upon whether the attachment is done through the conventional cellular radio interface (22 in FIGURE 1) or through the WLAN radio interface (FIGURE 7). Further, the Loose coupling model prevents the access of cellular network specific services like SMS (Shot Messaging System).

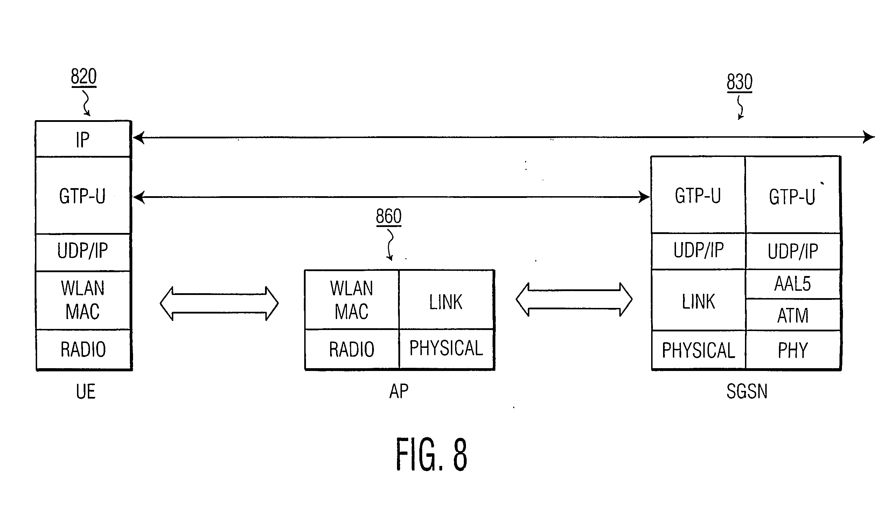

The invention implements a tight coupling model in which, as in the loose coupling model, the mobile terminal UE is attached or communicates through a WLAN as an access point. In the exemplary embodiment, the WLAN communicates with the cellular network through the Internet, however, it is to be understood that the WLAN may also communicate with the cellular network through other suitable communication networks. The protocol stack in a WLAN used in a system according to an aspect of the invention has a protocol stack which is (or at least can be) identical to that used in the case of loose coupling, and therefore a WLAN which is (or can be) used for the loose coupling model can also handle tight coupling traffic without any modification. A further advantage which can be achieved in the invention, but which is not found in the prior art loose coupling model, is that the signaling protocols in the user terminal and the SGSN, which are used to manage user data connections and to manage mobility (including authorization), are those already standardized by cellular network specifications such as the CM (Connection Management) and the GMM (GPRS Mobility Management) protocol. According to a further aspect of the invention, in order to avoid the complexity of the radio control protocols (RRC in figure 2a) linked with the cellular network radio interface (22 in figure 1) technology and its complete redesign, a new simplified protocol called RAL (Radio Adaptation Layer) is defined. The RAL layer is a subset of the known RANAP protocol and includes the commands for establishing and managing, i.e., setting up, a connection. This new protocol is very similar to the RANAP (figure 2a) protocol, and thus is readily implemented. The RAL protocol layer is also similarly implemented in the SGSN. According to one aspect of the invention, and in contradistinction to the loose coupling scenario set forth in conjunction with FIGURES 1, 2a, 2b, 3, 4, and 5, connection requests from the SGSN to the mobile terminal UE by mean of this RAL protocol directly provide QOS parameters to the mobile terminal, and the mobile terminal translates these parameters into radio dependent parameters. Also, as described below in conjunction with FIGURE 8, the transport of user data is compliant with the conventional model, described above in conjunction with FIGURE 3, in which the transport protocol GTP-U is used between the SGSN and the mobile terminal UE, thereby implying no change in the SGSN.

FIGURE 6 is a simplified representation of the flow of control information and data according to an aspect of the invention. In FIGURE 6, elements corresponding to those of FIGURE 4 are designated by like reference alphanumerics. As illustrated in FIGURE 6, the control information, including the request for access by the mobile terminal 620, flows between the mobile terminal 620 and the core network 630 of a cellular communications system 600 by means of a control path 628, which passes through the public WLAN 412 and the Internet 410. User Data flowing between mobile terminal 620 and a remote web server illustrated as 416 flows by a data path 626a through the WLAN 412, Internet 410, and core network 630, and then by a further path 626b between core network 630 and web server 416, again by way of Internet 410.

FIGURES 7 and 8 illustrate the control and data protocol stacks, respectively, according to an embodiment of the invention, for enabling the connectivity functions expressed in FIGURE 6. In FIGURE 7, 720 designates the control protocol stack for the mobile user UE (620 of FIGURE 6), 730 the control protocol stack for the SGSN (630 of FIGURE 6), and 760 the control stack for the access point (AP). The protocol stack of access point AP of FIGURE 7 is exactly the same as that of a prior-art wireless LAN used in the loose coupling model. Comparison of the stacks of FIGURE 7 with those of the loose coupling solution, as illustrated in FIGURE 2a, shows that all the protocols related to the radio link, namely stacks 250 and 252, have disappeared. The 3GPP UMTS Radio Access Network Adaptation Protocol (RANAP) used in the arrangement of FIGURE 2a is replaced in FIGURE 7 by Radio Adaptation Layer Protocol (RALP), which is a subset of RANAP and implemented in the mobile terminal and SGSN, plus some extra commands related to encryption.

Most of the RALP messages are based on RANALP. Therefore, the RALP header contains a value that indicates the format of the message. The general RALP message format includes (a) version number, (b) integrity check information (only when integrity protection is required), and (c) remaining information elements (IE).

Thus, the Radio Adaptation Layer (RAL) entity of UE 720 and SGSN 730 performs the functions of the RANAP. The RALP control information is transmitted between user terminal UE 720 of FIGURE 7 and SGSN 730 of FIGURE 7 by way of access point (AP) 760, but the RALP control information is not processed by the access point, so essentially flows directly between the UE and the SGSN, as suggested by path 761.

In FIGURE 7, note that the access point (AP) 760 is configured, or has protocol stacks, exactly as set forth in conjunction with the "loose coupling" solution of FIGURE 5. More particularly, the access point (AP) 516 of FIGURE 5 communicates with the mobile terminal with physical radio equipment and the EAPOL/WLAN protocol, corresponding to the left portion of AP stack 760 of FIGURE 7. Similarly, access point 516 of FIGURE 5 communicates with the Authentication, Authorization, and Accounting (AAA) portion 530 of the core network 414 of FIGURE 4 by means of a physical level (not expressly illustrated) together with Diameter/TCP-IP protocols, which is identical to the protocol stack represented on the right side of the AP stack 760 of FIGURE 7. Also note that the authentication protocol and the other control protocols set forth in FIGURE 7 are those already specified by the 3G cellular specification document, and more particularly by the 3GPP UMTS: connection management SM and SMS specifications and GMM as introduced in the first section of that document. Consequently, a wireless LAN access point can operate in the inventive arrangement without any substantive modification necessary for implementing a tight coupling arrangement, which is a major advantage.

When a mobile terminal UE moves into the coverage area of a wireless LAN, or is initially switched ON in such a coverage area, it first establishes an EAP connection with a remote server (SGSN in this case) in conformance with the procedure discussed in relation to the loose coupling scenarios. The access point authorizes or carries only the control or EAP traffic. When the UE is authenticated according to the relevant protocol, such as 3G GPRS protocol (GMM), the SGSN 730 authorizes the user's traffic by sending a DIAMETER message, known in the art, to the access point (AP) 760, using the procedure followed by the AAA server 424 in the loose coupling scenario.

When the user terminal UE 720 requests connection by means of the connection management (CM) protocol, the SGSN 730 processes the request and, using the RALP protocol, requests that the mobile unit establish the radio part of the connection, by which data can be communicated. In response to the request, the user terminal UE 720 translates the request into parameters which are used to establish the corresponding radio connection, ultimately completed by way of the WLAN protocol.

FIGURE 8 illustrates the data protocol stacks for the user plane for implementing the tight coupling arrangement according to the present invention. Comparing the stacks of FIGURE 8 with the 3G GPRS stacks of FIGURE 3, it can be seen that all the protocols relating to the GPRS radio network are absent. The illustrated data stacks for the user terminal, the access point, and the SGSN are designated 820, 860, and 830, respectively. A notable feature of the present invention is that the radio control functions of the RNC are embedded in the control stack of the mobile terminal by virtue of the abovedescribed protocol structure.

In the data stack arrangement of FIGURE 8, the GPRS Tunneling Protocol (GTP) is "directly" connected between the user terminal UE 820 and the SGSN 830 as indicated by line 865. The GTP protocol is carried over UDP/IP as specified by the 3GPP standard. GTP encapsulates user data packets, such as, for example, IP datagrams. The user data packets are carried transparently by the access point AP 860, and by the SGSN up to GGSN (FIGURE 1) that performs the function of an IP router.

The "tight" communication system according to the invention provides mobility for the user terminal, which is inherent in the GMM protocol. It is also inherently capable of full 3G GPRS service, full accounting, and security, all inherent in the GMM protocol.

Among the advantages of various embodiments of the invention are that the coupling is realized or accomplished through an Internet Protocol (IP) based network, which may be the Internet, and that the solution is compatible, at least as to the WLAN, with the loose coupling solution as currently envisaged by 3GPP SA2, IEEE 802.11i or ETSI/BRAN.

Thus, a method according to an aspect of the invention is for communicating data between a mobile terminal (620) and a server (630; 416). The method comprises the steps of communicating from the mobile terminal (620) to a wireless LAN access point (412) a request for data channel access to the Internet (410), and routing the request (628) for a data channel from the wireless LAN access point (412), by way of the Internet (410), to a Serving GPRS Support Node (630) of a cellular communication system (600). The method also includes the step of communicating authorization (628) for the data channel from the Serving GPRS Support Node (630) of the cellular communications system (600) to the wireless LAN access point (412) by way of the Internet (410). In response to the authorization, a data channel is opened (627, 626a) between the user terminal (620) and the Serving GPRS Support Node (630) by way of the wireless LAN (412) and the Internet (410). Particular data is communicated between the user terminal (620) and the Serving GPRS Support Node (630) of the cellular communication system by way of the data channel wireless LAN access point (412) and the Internet (410).

In a particular mode of this aspect of the method of the invention, the step of communicating particular data includes the further step of communicating the particular data between the Serving GPRS Support Node (630) and a server (416) associated with the Internet. As a result, the user terminal can access or browse the Internet.

According to another aspect of the invention, a method for communicating between a mobile user terminal (620) and a cellular network (600) by way of a wireless LAN (412) comprises the steps of providing at the user terminal (620) a communication protocol (WLANMAC and Radio) for communicating with the wireless LAN (412), and providing at the user terminal (620), and over the communication protocol (WLANMAC and Radio), a standardized EAPOL protocol for packet frame communication. In addition, the method includes the provision, at the user terminal, and over the EAPOL protocol, of a standardized EAP protocol for communicating authorization control information, and further providing, at the user terminal, and over the EAP protocol, a Radio Adaptation Layer protocol, which Radio Adaptation Layer protocol provides control of the radio communications. At the cellular network (600), a Serving GPRS Support Node (630) is provided. An Internet protocol stack (730, TCP/IP) suited for communication over the Internet (410) is associated with the Serving GPRS Support Node (630). A standardized EAP protocol for communicating authorization control information over the Internet (410) is provided over the Internet protocol stack (730, TCP/IP). A Radio Adaptation Layer protocol (RAL), which Radio Adaptation Layer protocol provides control of the radio communications, is provided over the EAP protocol at the Serving GPRS Support Node (630). Communications are between the wireless LAN (412) and the cellular system (600) by way of the Internet (410). Finally, communications are provided between the user terminal (620) and the wireless LAN (412) by use of the Radio Adaptation Layer (RAL).

In a particular mode of this other method, the step of providing, at the cellular network (600), a Serving GPRS Support Node (630), and associating with the Serving GPRS Support Node (630) an Internet protocol stack (Diameter, TCP/IP) suited for communication over the Internet (410), includes the step of providing at least TCP/IP protocol over a physical layer, and providing Diameter protocol over the TCP/IP protocol.

## Claims

1. A method for implementing a tight coupling arrangement between first (412) and second (630) communications networks for allowing a mobile terminal to communicate with a third communications network (410) through the first and second communications networks, said method comprising the steps of:
(a) providing, in the first communications network, an access point (860) having protocol stacks adapted for operation within a loose coupling arrangement that allows the mobile terminal to communicate data traffic with the third communications network through the first communications network without traversing through a user plane of the second communications network, wherein said second communications network comprises a cellular network and further wherein the access device of the second communications network comprises a serving general packet radio service support node (730).
(b) providing, in the mobile terminal, radio network controller protocol stacks that directly interface (761) with corresponding radio network controller protocol stacks in an access device of the second communications network; and
(c) providing, in the access device (730) of the second communications network, the corresponding radio network controller protocol stacks for interfacing with the mobile terminal radio network controller protocol stacks, whereby the mobile terminal is able to interface with the access device to traverse the second communications network to thereby communicate with the third communications network in a tight coupling arrangement.

2. The method according to claim 1, wherein the first communications network comprises a wireless local area network in accordance with IEEE 802 standards.

3. The method according to claim 1, wherein step (b) includes the step of providing, in the mobile terminal, a control data protocol stack that includes a subset of the radio access network adaptation protocol for establishing and setting up a connection.

4. The method according to claim 3, wherein step (a) includes the step of providing in the access point a protocol stack comprising Radio/wireless local area network media access control/extended authentication protocol over local area network/Diameter/transmission control protocol protocols.

5. The method according to claim 3, wherein step (c) includes the step of providing in the access device of the second communications network e the control data protocol stack that includes the subset of the radio access network adaptation protocol for establishing and setting up the connection.

6. The method according to claim 1, wherein step (b) includes the step of providing, in the mobile terminal, a user data protocol stack that includes general packet radio service tunnel protocol - user plane/user datagram protocol/internet protocol/ wireless local area network media access control protocols.

7. The method according to claim 6, wherein step (a) includes the step of providing, in the access point, the user data protocol stack that includes Radio/ wireless local area network media access control/Link/Physical Layer protocols.

8. The method according to claim 6, wherein step (c) includes the step of providing, in the access device of the second communications network, a user data protocol stack that includes general packet radio service tunnel protocol - user plane /user datagram protocol/internet protocol/Link/Physical layer protocols.

9. A mobile terminal (720) for communicating with a wireless local area network for accessing a communications network through the wireless local area network (412) and a cellular network (630) said mobile terminal comprising:
means for communicating control data and user data with a wireless local area network access point (860) configured for loose coupling between the wireless local area network and the cellular network; and
radio network controller protocol stacks for enabling the mobile terminal to communicate with the communications network through the wireless local area network and the cellular network in a tight coupling arrangement, wherein the radio network controller protocol stack includes a control data protocol stack that includes radio adaptation layer/ extended authentication protocol/ extended authentication protocol over local area network/ wireless local area network media access control protocol stack for establishing a connection (761) between the mobile terminal and the wireless local area network and the cellular network.

10. The mobile terminal according to claim 9, wherein the radio adaptation layer protocol comprises a subset of the radio access network adaptation protocol for establishing the connection.

11. The mobile terminal according to claim 9, wherein the radio network controller protocol stack includes a user data protocol stack that includes general packet radio service tunnel protocol - user plane/user datagram protocol/internet protocol/wireless local area network media access control protocols.

## Patentansprüche

1. Verfahren zum Implementieren einer Anordnung fester Kopplung zwischen ersten (412) und zweiten (630) Kommunikationsnetzen zum Erlauben, daß ein mobiles Endgerät über das erste und zweite Kommunikationsnetz mit einem dritten Kommunikationsnetz (410) kommuniziert, mit folgenden Schritten:
(a) Bereitstellen im ersten Kommunikationsnetz eines Zugangspunkts (860) mit Protokollstapeln zur Operation in einer Anordnung lockerer Kopplung, die dem mobilen Endgerät erlaubt, Datenverkehr durch das erste Kommunikationsnetz mit dem dritten Kommunikationsnetz zu kommunizieren, ohne eine Benutzerebene des zweiten Kommunikationsnetzes zu durchlaufen, wobei das zweite Kommunikationsnetz ein Zellularnetz umfaßt und weiterhin wobei die Zugangsvorrichtung des zweiten Kommunikationsnetzes einen Dienstenetzknoten (730) umfaßt;
(b) Bereitstellen im mobilen Endgerät von Funknetzsteuerungsprotokollstapeln, die direkt in einer Zugangsvorrichtung des zweiten Kommunikationsnetzes an entsprechende Funknetzsteuerungsprotokollstapel angeschlossen sind (761); und
(c) Bereitstellen in der Zugangsvorrichtung (730) des zweiten Kommunikationsnetzes der entsprechenden Funknetzsteuerungsprotokollstapel zum Anschließen an die Funknetzsteuerungsprotokollstapel des mobilen Endgeräts, wodurch das mobile Endgerät in der Lage ist, sich an die Zugangsvorrichtung anzuschließen, um das zweite Kommunikationsnetz zu durchlaufen, um **dadurch** in einer Anordnung fester Kopplung mit dem dritten Kommunikationsnetz zu kommunizieren.

2. Verfahren nach Anspruch 1, wobei das erste Kommunikationsnetz ein drahtloses Ortsnetz nach IEEE 802-Standards umfaßt.

3. Verfahren nach Anspruch 1, wobei der Schritt (b) den Schritt des Bereitstellens im mobilen Endgerät eines Steuerungsdatenprotokollstapels umfaßt, der eine Teilmenge des Funkzugangsnetzanpassungsprotokolls zum Herstellen und Aufbauen einer Verbindung umfaßt.

4. Verfahren nach Anspruch 3, wobei der Schritt (a) den Schritt des Bereitstellens, im Zugangspunkt, eines Protokollstapels mit Protokollen für Funk-/drahtlose Ortsnetz-Medienzugangssteuerung/erweitertes Authentifizierung über Ortsnetz-/Diameter-/übertragungssteuerungsprotokolle umfaßt.

5. Verfahren nach Anspruch 3, wobei der Schritt (c) den Schritt des Bereitstellens, in der Zugangsvorrichtung des zweiten Kommunikationsnetzes, des Steuerungsdatenprotokollstapels umfaßt, der die Teilmenge des Funkzugangsnetzanpassungsprotokolls zum Herstellen und Aufbauen der Verbindung umfaßt.

6. Verfahren nach Anspruch 1, wobei der Schritt (b) den Schritt des Bereitstellens im mobilen Endgerät eines Benutzerdatenprotokollstapels umfaßt, der Protokolle für GPRS-Tunnelprotokoll - Benutzerebene/Benutzerdatengrammprotokoll/Internetprotokoll-/drahtlose Ortsnetz-Medienzugangssteuerung umfaßt.

7. Verfahren nach Anspruch 6, wobei der Schritt (a) den Schritt des Bereitstellens, im Zugangspunkt, des Benutzerdatenprotokollstapels umfaßt, der Protokolle für Funk-/drahtlose Ortsnetz-Medienzugangssteuerung-/ Übertragung/physikalische Schicht umfaßt.

8. Verfahren nach Anspruch 6, wobei der Schritt (c) den Schritt des Bereitstellens, in der Zugangsvorrichtung des zweiten Kommunikationsnetzes, eines Benutzerdatenprotokollstapels umfaßt, der Protokolle für GPRS-Tunnelprotokoll - Benutzerebene-/ Benutzerdatengrammprotokoll/Internetprotokoll-/ Übertragung-/ physikalische Schicht umfaßt.

9. Mobiles Endgerät (720) zum Kommunizieren mit einem drahtlosen Ortsnetz zum Zugreifen auf ein Kommunikationsnetz über das drahtlose Ortsnetz (412) und ein Zellularnetz (630), mit folgendem:
Mitteln zum Kommunizieren von Steuerungsdaten und Benutzerdaten mit einem drahtlosen Ortsnetz-Zugangspunkt (860), konfiguriert für lockere Kopplung zwischen dem drahtlosen Ortsnetz und dem Zellularnetz; und
Funknetzsteuerungsprotokollstapeln zum Ermöglichen, daß das mobile Endgerät über das drahtlose Ortsnetz und das Zellularnetz in einer Anordnung fester Kopplung mit dem Kommunikationsnetz kommuniziert, wobei der Funknetzsteuerungsprotokollstapel einen Steuerungsdatenprotokollstapel umfaßt, der Protokolle für Funkanpassungsschicht erweitertes Authentifizierungsprotokoll erweitertes Authentifizierungsprotokoll über Ortsnetz drahtlosen Ortsnetz-Medienzugangssteuerungsprotokollstapel zum Herstellen einer Verbindung (761) zwischen dem mobilen Endgerät und dem drahtlosen Ortsnetz und dem Zellularnetz umfaßt.

10. Mobiles Endgerät nach Anspruch 9, wobei das Funkanpassungsschichtprotokoll eine Teilmenge des Funkzugangsnetzanpassungsprotokolls zum Herstellen der Verbindung umfaßt.

11. Mobiles Endgerät nach Anspruch 9, wobei der Funknetzsteuerungsprotokollstapel einen Benutzerdatenprotokollstapel umfaßt, der Protokolle für GPRS-Tunnelprotokoll - Benutzerebene-/Benutzerdatengrammprotokoll Internetprotokoll drahtlose Ortsnetz-Medienzugangssteuerung umfaßt.

## Revendications

1. Un procédé pour la mise en application d'un agencement de couplage serré entre un premier (412) et un deuxième (630) réseaux de communication pour permettre à un terminal mobile de communiquer avec un troisième réseau de communication (410) par l'intermédiaire du premier et deuxième réseaux de communication, ledit procédé comprenant les étapes consistant à :
(a) fournir, dans le premier réseau de communication, un point d'accès (860) comportant des piles de protocoles adaptées pour opérer dans un agencement de couplage lâche qui permet au terminal mobile de communiquer le trafic de données au troisième réseau de communication par l'intermédiaire du premier réseau de communication sans passer par un plan utilisateur du deuxième réseau de communication, où ledit deuxième réseau de communication comprend un réseau cellulaire et, de surcroît, où le dispositif d'accès du deuxième réseau de communication comprend un noeud de support de service général de radiocommunication par paquets de desserte (730) ;
(b) fournir, dans le terminal mobile, des piles de protocoles de contrôleurs de réseau hertzien permettant un interfaçage (761) direct avec les piles de protocoles de contrôleurs de réseau hertzien correspondantes dans un dispositif d'accès du deuxième réseau de communication ; et
(c) fournir, dans le dispositif d'accès (730) du deuxième réseau de communication, les piles de protocoles de contrôleurs de réseau hertzien correspondantes pour créer une interface avec les piles de protocoles de contrôleurs de réseau hertzien du terminal mobile, où le terminal mobile peut s'interfacer avec le dispositif d'accès pour traverser le deuxième réseau de communication et ainsi communiquer avec le troisième réseau de communication dans un agencement de couplage serré.

2. Le procédé selon la revendication 1, où le premier réseau de communication comprend un réseau local sans fil conformément au normes IEEE 802.

3. Le procédé selon la revendication 1, où l'étape (b) comprend l'étape consistant à fournir, dans le terminal mobile, une pile de protocoles de données de contrôle comportant un sous-ensemble du protocole d'adaptation de réseau hertzien permettant d'établir et de régler une connexion.

4. Le procédé selon la revendication 3, où l'étape (a) comprend l'étape consistant à fournir dans le point d'accès une pile de protocoles comportant les protocoles radio/contrôle d'accès aux supports du réseau local sans fil/protocole d'authentification étendue via le réseau local sans fil/Diameter/protocole de contrôle de transmission.

5. Le procédé selon la revendication 3, où l'étape (c) comprend l'étape consistant à fournir, dans le dispositif d'accès du deuxième réseau de communication la pile de protocoles de données de contrôle comportant le sous-ensemble du protocole d'adaptation de réseau hertzien permettant de définir et d'établir la connexion.

6. Le procédé selon la revendication 1, où l'étape (b) comprend l'étape consistant à fournir, dans le terminal mobile, une pile de protocoles de données utilisateur comportant un protocole de tunnellisation de service général de radiocommunication par paquets - protocoles plan utilisateur/protocole de datagrammes utilisateur/protocole IP/contrôle d'accès aux supports du réseau local sans fil.

7. Le procédé selon la revendication 6, où l'étape (a) comprend l'étape consistant à fournir, dans le point d'accès, la pile de protocoles de données utilisateur comportant les protocoles radio/contrôle d'accès aux supports du réseau local sans fil/liaison/couche physique.

8. Le procédé selon la revendication 6, où l'étape (c) comprend l'étape consistant à fournir, dans le dispositif d'accès du deuxième réseau de communication, une pile de protocoles de données utilisateur comportant un protocole de tunnellisation de service général de radiocommunication par paquets - protocoles plan utilisateur/protocole de datagrammes utilisateur/protocole IP/liaison/couche physique.

9. Un terminal mobile (720) permettant de communiquer avec un réseau local sans fil pour avoir accès à un réseau de communication par l'intermédiaire du réseau local sans fil (412) et d'un réseau cellulaire (630), ledit terminal mobile comprenant :
un moyen pour communiquer les données de contrôle et les données utilisateur avec un point d'accès du réseau local sans fil (860) configuré pour le couplage lâche entre le réseau local sans fil et le réseau cellulaire ; et
des piles de protocoles de contrôleurs de réseau hertzien pour permettre au terminal mobile de communiquer avec le réseau de communication par l'intermédiaire du réseau local sans fil et du réseau cellulaire dans un agencement de couplage serré, où la pile de protocoles de contrôleurs de réseau hertzien comprend une pile de protocoles de données de contrôle comportant les piles de protocoles couche d'adaptation radioélectrique/protocole d'authentification étendue/protocole d'authentification étendue via le réseau local sans fil/contrôle d'accès aux supports du réseau local sans fil permettant d'établir une connexion (761) entre le terminal mobile et réseau local sans fil et le réseau cellulaire.

10. Le terminal mobile selon la revendication 9, où le protocole de couche d'adaptation radioélectrique comporte un sous-ensemble du protocole d'adaptation au réseau hertzien permettant d'établir la connexion.

11. Le terminal mobile selon la revendication 9, où la pile de protocoles de contrôleurs de réseau hertzien comprend une pile de protocoles de données utilisateur qui comporte un protocole de tunnellisation de service général de radiocommunication par paquets - protocoles plan utilisateur/protocole de datagrammes utilisateur/protocole IP/contrôle d'accès aux supports du réseau local sans fil.
